# EUROPEAN PATENT APPLICATION

(11) **EP 4 714 768 A1**
(43) Date of publication of application: **25.03.2026**
(21) Application number: 24201154.2
(22) Date of filing: 18.09.2024
(51) Int. Cl.: B60W 30/18, B60W 50/16

(54) **ASSISTING IN CONTROLLING A VEHICLE**

(71) Applicant: Volvo Truck Corporation, 405 08 Göteborg (SE)
(72) Inventor: LAINE, Leo, 414 84 Göteborg (SE); GELSO, Esteban, 421 51 VÄSTRA FRÖLUNDA (SE); SADEGHI KATI, Maliheh, 433 51 Öjersjö (SE)
(74) Representative: Valea AB

(57) **Abstract**

A computer system (800) comprising processing circuitry (802) configured to assist in operating a vehicle (1) is provided. The processing circuitry (802) is configured to obtain characteristics indicative of physical attributes and/or capabilities of the vehicle (1). The processing circuitry (802) is configured to determine a maneuver to be performed by the vehicle (1). The processing circuitry (802) is configured to, based on the characteristics of the vehicle (1), identify one or more conditions (2) for the maneuver to be achievable. The processing circuitry (802) is configured to issue conditional information indicating at least one of the one or more conditions (2) to at least one an entity controlling the vehicle (1).

## Description

### TECHNICAL FIELD

The disclosure relates generally to vehicle control. In particular aspects, the disclosure relates to assisting in controlling a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Navigating vehicles can be challenging, in particular vehicles with trailers, multi-trailer vehicles, heavy duty vehicles, buses, etc. This is due to vehicle size, articulated joints, maneuverability constraints, and blind spots which all may increase in difficulty with size or type of the vehicle. Drivers of vehicles such as trucks with one or more trailers or other large vehicles often face difficulties in safely navigating through narrow street, negotiating intersections, making tight turns, finding suitable parking and accurately reversing into loading docks or parking spaces. These challenges are even more difficult when considering limited visibility and increased complexity when controlling one or more trailers. This issue is particularly critical in some geographical regions such as Sweden, where heavy vehicle combinations with a length of up to 34 meters are permitted.

Conventional navigation of vehicles are often insufficient in addressing the specific needs of certain vehicles leading to an increased risk of accidents or damage to property and cargo when operating such vehicles.

Hence, there is a strive to improve vehicle control.

### SUMMARY

According to a first aspect of the disclosure, a computer system comprising processing circuitry configured to assist in operating a vehicle is provided.

The processing circuitry is configured to obtain characteristics of the vehicle. The vehicle may be a combination vehicle comprising two, three, or more vehicle units.

The characteristics is indicative of physical attributes and/or capabilities of the vehicle.

The processing circuitry is configured to determine a maneuver to be performed by the vehicle. The maneuver is determined based on any one or more out of: an input indicative of the maneuver, vehicle status information indicative of surroundings of the vehicle and/or a motion of the vehicle, and a route for the vehicle to follow. In examples herein, the maneuver may be a complex driving maneuver such as operating the vehicle where there are small margins of error for successfully performing the maneuver. The maneuver may for example relate to making a tight turn and/or entering a tunnel.

The processing circuitry is configured to, based on the characteristics of the vehicle, identify one or more conditions for the maneuver to be achievable.

The processing circuitry is configured to issue conditional information indicating at least one of the one or more conditions to at least one an entity controlling the vehicle.

The first aspect of the disclosure may seek to improve vehicle control, in particular such that the vehicle can perform the maneuver. A technical benefit may include improved control of the vehicle. This is since the conditional information is indicated to the at least one an entity controlling the vehicle such that the at least one an entity can ensure that the one or more conditions are fulfilled to be able to perform the maneuver.

In particular, since the one or more conditions are identified based on the characteristics of the vehicle improved vehicle control is achieved. This is since the one or more conditions for being able to achieve the maneuver is accounting for the characteristics of the vehicles, i.e., its physical attributes and/or capabilities. For example, a size of the vehicle and/or its capabilities to distribute load as it performs a tight turn or is entering a narrow space may be used to identify the one or more conditions. The one or more conditions may then relate to how weight need to be distributed when performing a turning operation and/or how different parts of the vehicle need to move and/or where they need to be located for the maneuver to be achievable.

In examples herein, the at least one entity controlling the vehicle may comprise a driver of the vehicle and/or a control system. This means that the conditional information may be able to guide any or both of the driver or the control system in which of the one or more conditions they shall respectively achieve to ensure that the maneuver is achievable.

Optionally in some examples, including in at least one preferred example, the processing circuitry is configured to, in response to detecting that at least one of the one or more conditions are violated or are predicted to be violated, issue violation information indicating the violation or predicted violation of the one or more conditions. In these examples, the violation information is issued to any of: the at least one entity controlling the vehicle, surrounding environment of the vehicle, or a combination thereof.

In examples herein, when discussing improved vehicle control, this may mean that the vehicle can be controlled in any of: a more stable manner, more fine-grained manner, a more efficient manner, a safer manner, and a more accurate manner, in particular with regards to performing the maneuver.

A technical benefit may include improved control of the vehicle. This is since when it can be noticed that the vehicle will not be able to perform the maneuver due to violating the one or more conditions, the vehicle can be handled by the at least one entity controlling the vehicle to mitigate any hazards and/or to control the vehicle to meet the one or more conditions. Furthermore, if the one or more conditions cannot be met, then the violation information may ensure that the vehicle and its surroundings can at least maintain safety by triggering any suitable action needed if there is a hazard associated with not achieving the maneuver.

Optionally in some examples, including in at least one preferred example, issuing the violation information comprises any one or more out of: triggering a vibration in a steering wheel of the vehicle, triggering one or more operations for adjusting an operation of the vehicle to meet the one or more conditions, and triggering an alert.

A technical benefit may include improved control of the vehicle. This is since when it can be noticed that the vehicle will not be able to perform the maneuver due to violating the one or more conditions, the vehicle can be handled by the at least one entity controlling the vehicle to mitigate any hazards and/or to control the vehicle to meet the one or more conditions.

Optionally in some examples, including in at least one preferred example, issuing the conditional information comprises any one or both out of:
- indicating an interpretation of at least part of the one or more conditions to a user of the vehicle via a user interface, and
- providing information of at least part of the one or more conditions to a control system of the vehicle.

A technical benefit may include improved control of the vehicle. This is since any of the user, e.g., a driver, and the control system, whichever is more suitable can control the vehicle to meet the one or more conditions. Furthermore, the conditional information can be provided to both a user and a control system. This means that the control system can be configured to be in control of some aspects of the vehicle where automated systems are more accurate, and the user may control aspects needed to be controlled by a manual operator. The control system may also supply adjustments to user inputs and/or haptic feedback on user input such as to assist the user in controlling the vehicle to meet the one or more conditions.

Optionally in some examples, including in at least one preferred example, the one or more conditions are identified to be, when initiating or when performing the maneuver, any one or more out of:
- the vehicle being in an area, e.g., for being able to make a turning operation,
- a height of the vehicle being positioned with respect to a height constraint of an area, e.g., when the maneuver relates to entering a tunnel or building,
- the vehicle adhering to one or more time, motion, and/or control input constraints when performing one or more operations as part of the maneuver,
- the vehicle following a trajectory within an error margin,
- a center of gravity or load distribution of the vehicle is within an interval, e.g., to ensure that the vehicle will not roll over or have other stability hazards etc.
- respective axle height of one or more axles of the vehicle is within a respective interval, e.g., to ensure stability and
- respective vehicle motion parameters of the vehicle is within a respective interval,
- one or more articulation angles of the vehicle fulfill is within a respective interval,
- respective actuators of one or more actuators of the vehicle are actuated such that their respective position, parameters, or values are within a respective interval, and
- a steering input being within an interval, or adhering to a function of time.

A technical benefit may include improved control of the vehicle. This is since the one or more conditions may be identified to prepare for or for performing the maneuver. Since every maneuver may be different and may require different conditions for being achievable it may be important that the one or more conditions can be identified to one or more essential conditions, typically multiple conditions.

Optionally in some examples, including in at least one preferred example, the one or more conditions are identified to require the vehicle to any one or more out of:
- operate outside predefined traffic boundaries of a road,
- operate in multiple lanes of a road simultaneously, and
- operate in lanes dedicated for other vehicles and/or for traffic of a different longitudinal motion than a longitudinal motion of the vehicle.

A technical benefit may include improved control of the vehicle. This is since examples herein may comprise identifying when and/or if it is needed to fulfill conditions which are otherwise not part of ordinary traffic conditions or vehicle behavior. Hence, the maneuver will be achievable even if abnormal traffic behavior is necessary.

Optionally in some examples, including in at least one preferred example, the maneuver is determined to be any one or more out of:
- turning the vehicle,
- reversing the vehicle,
- parking the vehicle at a designated area, e.g., wherein the designated area may be limited in space such,
- entering a tunnel,
- avoiding one or more obstacles , and
- exiting or entering a road section such as a highway where parameters relating to acceleration, turning and/or lane changing is necessary may form part of the one or more conditions.

A technical benefit may include improved control of the vehicle. This is since vehicle is enabled to perform a wide range of maneuvers.

Optionally in some examples, including in at least one preferred example, the maneuver is determined to be performed in an area with a physical boundary for how the vehicle can and/or is allowed to operate.

A technical benefit may include improved control of the vehicle. This is since the vehicle will be enabled to operate and perform the maneuver within the physical boundary.

Optionally in some examples, including in at least one preferred example, the physical attributes of the vehicle comprises any one or more out of:
- type of the vehicle,
- number of vehicle units of the vehicle,
- wheelbase of the vehicle or vehicle units,
- width of the vehicle or vehicle units,
- length of the vehicle or vehicle units,
- tire wear of tires of the vehicle ,
- articulation or coupling points of the vehicle,
- load distribution per vehicle unit, axle, or wheel of the vehicle or vehicle units,
- a center of gravity in one, two, or three dimensions of the vehicle or vehicle units,
- an axle configuration of the vehicle, and
- a mass of the vehicle .

A technical benefit may include improved control of the vehicle. This is since when the physical attributes in a more detailed manner describe the characteristics of the vehicle, the one or more conditions can be more accurately identified. It follows that the conditional information can more accurately trigger the at least one entity to control the vehicle in an improved manner.

Optionally in some examples, including in at least one preferred example, the capabilities of the vehicle comprise any one or more out of:
- capabilities of motion support devices of the vehicle,
- capabilities of adjusting axle height of axles of the vehicle,
- capabilities of lifting axles of the vehicle,
- steering capabilities of axles of the vehicle,
- tire capabilities of the vehicle, and
- one or more capabilities for distributing load.

A technical benefit may include improved control of the vehicle. This is since when the capabilities in a more detailed manner describe the characteristics of the vehicle, the one or more conditions can be more accurately identified. It follows that the conditional information can more accurately trigger the at least one entity to control the vehicle in an improved manner.

Optionally in some examples, including in at least one preferred example, identifying the one or more conditions is based on any one or more out of;
- one or more simulated maneuvers,
- one or more previously performed maneuvers, and
- a vehicle model and a model of the environment where the maneuver is to be performed.

A technical benefit may include improved control of the vehicle. This is since when the one or more conditions can accurately be identified using simulation, historical data or accurate models of the vehicle and/or the environment, thereby leading to improvements in controlling the vehicle for performing the maneuver.

According to a second aspect of the disclosure, a vehicle comprising and/or being controlled by the computer system according to the first aspect.

Optionally in some examples, including in at least one preferred example, the vehicle is a combination vehicle comprising at least two vehicle units .

Optionally in some examples, including in at least one preferred example, the vehicle is a combination vehicle comprising a towing vehicle unit and at least two towed vehicle units.

According to a third aspect of the disclosure, a computer-implemented method for assisting in operating a vehicle is provided.

The method comprises, by processing circuitry of a computer system, obtaining characteristics of the vehicle. The characteristics is indicative of physical attributes and/or capabilities of the vehicle.

The method comprises, by the processing circuitry, determining a maneuver to be performed by the vehicle. The maneuver is determined based on any one or more out of: an input indicative of the maneuver, vehicle status information indicative of surroundings of the vehicle and/or a motion of the vehicle, and a route for the vehicle to follow.

The method comprises, by the processing circuitry, based on the characteristics of the vehicle, identifying one or more conditions for the maneuver to be achievable.

The method comprises, by the processing circuitry, issuing conditional information indicating at least one of the one or more conditions to at least one an entity controlling the vehicle.

Optionally in some examples, including in at least one preferred example, the method comprises, by the processing circuitry, in response to detecting that at least one of the one or more conditions are violated or are predicted to be violated, issuing violation information indicating the violation or predicted violation of the one or more conditions. In these examples, the violation information is issued to any of: the at least one entity controlling the vehicle, surrounding environment of the vehicle, or a combination thereof.

Optionally in some examples, including in at least one preferred example, issuing the violation information comprises any one or more out of: triggering a vibration in a steering wheel of the vehicle, triggering one or more operations for adjusting an operation of the vehicle to meet the one or more conditions, and triggering an alert.

Optionally in some examples, including in at least one preferred example, issuing the conditional information comprises any one or both out of: indicating an interpretation of at least part of the one or more conditions to a user of the vehicle via a user interface, and providing information of at least part of the one or more conditions to a control system of the vehicle.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary system diagram of a vehicle according to an example.
**FIG. 2** is a flow chart of a method according to an example.
**FIG. 3** is a block diagram illustrating an example maneuver.
**FIG. 4** is a block diagram illustrating an example maneuver.
**FIG. 5** is a block diagram illustrating an example maneuver.
**FIG. 6** is another view of **FIG. 1****,** according to an example.
**FIG. 7** is a flow chart of a method according to an example.
**FIG. 8** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

Examples herein may relate to improved vehicle control such as assisted and/or automated cornering or motion aid for vehicles of different characteristics to improve performance and efficiency in controlling the vehicle, together with an increased safety. Examples herein may relate to vehicles with multiple vehicle units, or long vehicles, or vehicles which have physical attributes or capabilities making them difficult to maneuver.

Examples herein may relate to providing assistance and/or control with respect to performing a maneuver while considering characteristics of the vehicle.

Examples herein may further reduce frustration or stress associated with complex maneuvers for non-expert users, e.g., drivers, and may also bring a benefit to traffic flow, by minimizing any possible disruption caused when performing complex maneuvers.

In examples herein, a graphical indication of the area or trajectory on a road of where a vehicle should be located or drive, may be provided to a driver of a vehicle. Furthermore, a suggested speed may be provided. The indication may be how the vehicles shall successfully arrive to the destination point and/or perform the maneuver in question, e.g., without having to reverse, stop, or change a calculated route. Other indications than graphical indications may also apply to examples herein.

The indication could be enhanced by active assistance such as vibrating a steering wheel, e.g., make harder to travel in a wrong trajectory, vibrating accelerator and/or braking pedal or trigger a beep noise, when the current steering and vehicle speed is estimated probably to end up in an unsuccessful maneuver. A tone of the beep or intensity of the vibration may be indicative of a probability of failing the maneuver.

In some examples herein, an automated aid may help a driver of a vehicle combination, by combining a navigations system with a camera-based guidance system, into a system that by itself could steer and/or control the speed of a multi-unit vehicle with small help of the driver.

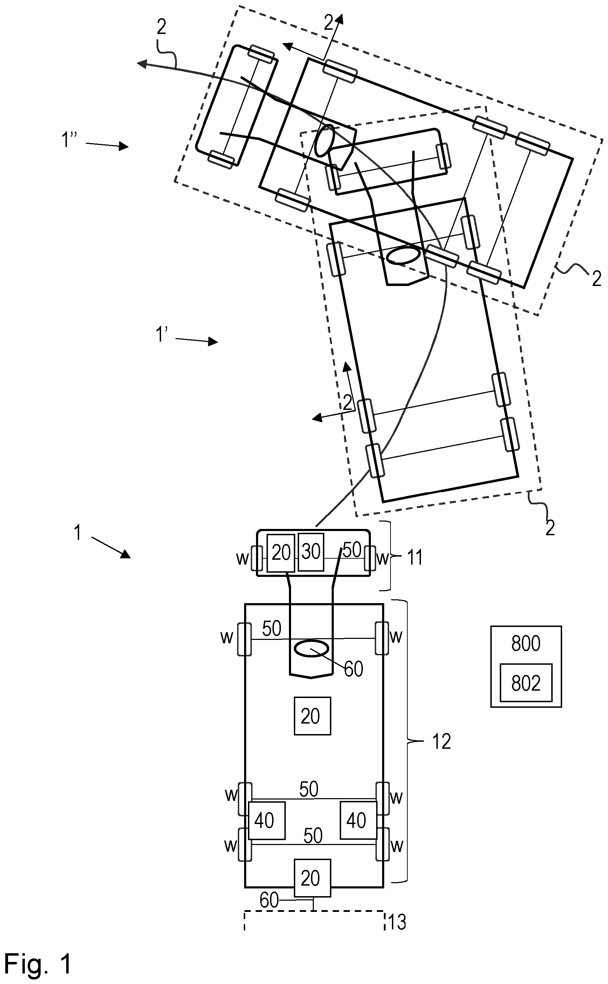

**FIG. 1** is an exemplary system diagram of a **vehicle 1** according to an example.

The vehicle 1 may be any suitable vehicle, e.g., any of a: car, truck, bus, heavy duty vehicle, construction equipment, combination vehicle comprising one or more vehicle units.

The vehicle 1 may be a combination vehicle comprising at least two **vehicle units 11, 12, 13,** e.g., a tractor and a trailer. The vehicle 1 may be a combination vehicle comprising a towing vehicle unit 11, e.g., a tractor, and at least two towed vehicle units 12, 13, e.g., at least two trailers.

The vehicle 1 may comprise a number of **wheels w** and respective tires.

The vehicle 1 may comprise one or more **axles 50.** The one or more axles 50 may be part of any axle configuration. Each axle may respectively be any one or more of: a steered axle and a driven axle.

The vehicle 1 may comprise one or more sensors 20. The one or more sensors 20 may be of any suitable type and as a non-limiting example may comprise any one or more of:
- one or more cameras,
- one or more Light Detection and Ranging (Lidar) sensor,
- one or more wheel and/or vehicle speed sensors, and
- one or more Inertial Measurement Units (IMUs).

The vehicle 1 may comprise a user interface 30 which may comprise any suitable functions for inputting instructions or commands to the vehicle 1 and/or outputting information from the vehicle 1 such as haptic, audio or visual feedback to a user of the vehicle. If the user of the vehicle is remote, the user interface 30 may also be at least partly remote to the vehicle, e.g., if a user is partly or fully remote controlling the vehicle 1.

When the vehicle 1 comprises multiple vehicle units, the vehicle 1 may comprise one or more coupling points 60 such as fifth wheel couplings and/or towbar couplings. The one or more coupling points 60 may have respective associated articulation angles, e.g., measured by the one or more sensors 20.

The vehicle 1 may comprise Motion Support Devices 40 (MSD), e.g., for controlling a motion of the vehicle and/or controlling motion of each respective wheel w using different respective MSD 40. The MSDs 40 may comprise any one or more out of:
- One or more suspension systems for controlling vertical motion and/or load applied to axles of the vehicle 1,
- An axle lifting control system for lifting the one or more axles 50 of the vehicle,
- One or more motors or engines, e.g., for driving the one or more axles 50 and/or for driving respective wheels w, and
- One or more brakes

In examples herein, the vehicle 1 may comprise and/or be controlled by the computer system 800 and/or the processing circuitry 802 therein.

The computer system 800 and/or the processing circuitry 802 therein may be an Electronic Control Unit (ECU) of the vehicle 1.

The computer system 800 and/or the processing circuitry 802 therein may be comprised in the vehicle 1 or may be at least partly comprised in a location remote from the vehicle 1, e.g., in a server or as part of a cloud service.

The computer system 800 and/or the processing circuitry 802 therein may be able to control any suitable aspect of the vehicle, e.g., and may be communicatively connected to any suitable entity of the vehicle 1 for said purpose. For example, the computer system 800 and/or the processing circuitry 802 therein may control steering and motion of the vehicle 1 and/or may utilize the user interface 30 to communicate assisting information to a user of the vehicle 1.

In examples herein, the vehicle 1 may perform or may be about to perform a maneuver such as making a sharp turn and/or entering an area with constrained boundaries. Examples herein may relate to determine the maneuver to be performed by the vehicle 1, e.g., based on any one or more out of: an input indicative of the maneuver, vehicle status information indicative of surroundings of the vehicle 1 and/or a motion of the vehicle 1, and/or a route for the vehicle 1 to follow. In other words, the maneuver may be identified in any suitable manner.

Examples herein further relates to identifying one or more conditions 2 for the maneuver to be achievable. The one or more conditions 2 are identified based on the characteristics of the vehicle 1. The characteristics are indicative of physical attributes and/or capabilities of the vehicle 1. In other words, the one or more conditions may relate to how the vehicle 1 shall operate such that the vehicle 1, when being of a certain size or having certain number of trailers shall move or having certain capabilities for load distribution between different vehicle units, shall follow a trajectory, or position itself in certain areas, e.g., with a certain orientation, to be able to perform the maneuver.

The one or more conditions 2 can be any type of context for a state, position or motion of the vehicle 1. FIG. 1 the one or more conditions 2 are further illustrated as two areas indicated by the dashed boxes in FIG. 1 which the vehicle 1 may need to be positioned in. In other words, the vehicle 1 may need to assume a position, orientation and/or to follow a trajectory, for the maneuver to be achievable. The example maneuver of FIG. 1 may be a turning a sharp turning radius and/or entering a space constrained area such as a warehouse or tunnel.

As indicated in FIG. 1, the one or more conditions 2 may further relate to respective motion and/or forces applied to or by respective wheels w. The one or more conditions 2 may further relate to load distribution, axle height of the one or more axles 50, steering angle, etc.

Examples herein relates to issuing conditional information indicating at least one of the one or more conditions 2 to at least one an entity controlling the vehicle 1. The at least one entity controlling the vehicle 1 may be a user, e.g., a driver which may be remote or inside the vehicle 1, but may additionally or alternatively relate to an automated driving system of the vehicle 1.

The conditional information may be control signals to the automated driving system and/or may be information indicated to the user of the vehicle 1, e.g., using the user interface 30 by haptics, audio, or visual information. For example, the information may be displayed on a screen, dashboard or windshield of the vehicle 1.

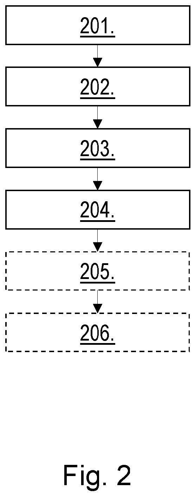

**FIG. 2** is a flow chart of a computer-implemented method for assisting in operating the vehicle 1. The computer system 800 and/or the processing circuitry 802 therein may be configured to perform the method according to the following actions. The method may comprise the following actions in any suitable order. Dashed boxes in FIG. 2 may indicate optional actions.

### Action 201

The method comprises obtaining characteristics of the vehicle 1. The characteristics being indicative of physical attributes and/or capabilities of the vehicle 1.

Below is a non-limiting list of examples of physical attributes and/or capabilities. It should be noted that any physical attribute or capability may be part of examples herein, at least when they affect how the vehicle 1 needs to be controlled to be able to perform maneuvers of examples herein.

The physical attributes of the vehicle 1 may comprise type of the vehicle 1, e.g., whether or not the vehicle 1 is a truck, car, bus, vehicle combination, etc.

The physical attributes of the vehicle 1 may comprise number of vehicle units of the vehicle 1 and/or number of trailers of the vehicle 1.

The physical attributes of the vehicle 1 may comprise length and/or width of the vehicle 1.

The physical attributes of the vehicle 1 may comprise wheelbase and/or width of the vehicle 1.

The physical attributes of the vehicle 1 may comprise tire wear of tires of the vehicle 1. The tire wear may relate to and/or may indicate at least part of a road friction coefficient.

More generally, the physical attributes of the vehicle 1 may comprise tire properties of tires of the vehicle 1. The tire properties may comprise any one or more out of: stiffness, longitudinal cornering, vertical cornering, vertical stiffness , rolling resistance, longitudinal tire losses, lateral tire losses.

The physical attributes of the vehicle 1 may comprise the one or more articulation points and/or the one or more coupling points 60 of the vehicle 1.

The physical attributes of the vehicle 1 may comprise an axle configuration of the vehicle 1, e.g., including any one or more out of a number of axles of the vehicle 1, a position of the axles of the vehicle 1, and a type of the axles of the vehicle 1.

The physical attributes of the vehicle 1 may comprise a mass of the vehicle 1, and/or different vehicle units of the vehicle 1.

The capabilities of the vehicle 1 may comprise capabilities of the MSDs 40 of the vehicle 1, e.g., ability for propulsion, steering, and/or braking per wheel or axle.

The capabilities of the vehicle 1 may comprise capabilities of adjusting axle height of axles of the vehicle 1.

The capabilities of the vehicle 1 may comprise steering capabilities of axles of the vehicle 1,

The capabilities of the vehicle 1 may comprise tire capabilities of the vehicle 1, e.g., any one or more of stiffness, tire forces or control thereof, tire slip or control thereof, lateral slip control, e.g., lateral slip limit, longitudinal slip control, e.g., longitudinal slip limit.

The capabilities of the vehicle 1 may comprise one or more capabilities for distributing load of the vehicle 1 and possibly between different vehicle units of the vehicle 1, e.g., when using active suspensions on individual wheels.

The capabilities of the vehicle 1 may comprise one or more capabilities for handling tire forces of the vehicle 1 such as for cornering, traction, braking or torque.

The capabilities of the vehicle 1 may comprise one or more capabilities for handling a tire-road interaction, e.g., surface conditions, tyre parameters such as pressure (inflate or deflate tires) for affecting a friction coefficient.

The capabilities of the vehicle 1 may comprise one or more capabilities for power supplies or cooling system of the vehicle 1, e.g., wherein these capabilities may be considered/aggregated in the capabilities of the above-mentioned MSDs 40.

Capabilities of examples herein may further indicate respective limitations.

### Action 202

The method comprises determining a maneuver to be performed by the vehicle 1.

The maneuver is determined in any suitable manner such as based on any one or more out of :
- an input indicative of the maneuver, e.g., a user inputs a maneuver to perform by any suitable means, e.g., via the user interface 30,
- vehicle status information indicative of surroundings of the vehicle 1 and/or a motion of the vehicle 1, e.g., the method herein may predict the maneuver based on the vehicle status information and/or the motion of the vehicle 1, wherein the vehicle status information and/or the motion of the vehicle 1 may be obtained by using the one or more sensors 20,
- a route for the vehicle 1 to follow, e.g., wherein a map may indicate what maneuver to perform with respect to the route and a current position of the vehicle 1 as obtained by any suitable localization system of the vehicle 1.

Additionally or alternatively, the above-mentioned vehicle status information may comprise any one or more out of: sensor data, actuator data, lidar/camera data, input and/or output, vehicle motion, load distribution, suspension actuation/axle heights, and articulation angles of the vehicle 1.

In other words, the maneuver may be determined in any suitable manner, predefined or dynamically determined using sensor data, motion data, and/or localization information of the vehicle 1.

In some examples the maneuver is determined to be any one or more out of:
- turning the vehicle 1, e.g., wherein turning the vehicle 1 comprises one, two, or more turns,
- reversing the vehicle 1,
- parking the vehicle 1 at a designated area,
- entering a tunnel, e.g., wherein the tunnel may have a height constraint such that the vehicle 1 need to align itself with the tunnel such as not to collide with a side of the tunnel,
- avoiding one or more obstacles, e.g., dynamic or static objects, and
- exiting or entering a road section such as highways or areas with pedestrians.

In general, the maneuver may be a complex maneuver difficult for a user to perform within assistance.

The maneuver may be associated with one or more motion constraints to perform said maneuver.

In some examples, the maneuver is determined to be performed in an area with a physical boundary for how the vehicle 1 can and/or is allowed to operate. For example, the maneuver may be performed in an area where the vehicle 1 will risk colliding and/or risk falling if operating outside the physical boundary.

In other words, the maneuver may be determined to relate to any one or more out of, turning, entering narrow paths such as tunnels with height or width constraints, lane changes, entering/exiting highways, navigating paths/roads in hilly landscapes or with steep fall height, navigating around obstacles, static obstacles, pedestrians, and environment hazards.

The physical boundary may additionally or alternatively be roofs, fences, or may be virtual/abstract as in rules for where not to go, or dangerous areas not allowed for the vehicle 1 to operate in.

The obstacles may be any suitable obstacles such as soft and/or hard objects, wherein off-road terrain may be a soft object and wherein roadside barriers or guard rails may be referred to as hard objects.

In some examples, the maneuver may e.g., as a secondary objective, be determined based to reduce wear such as tire wear, e.g., with a mission to try to protect tires with the highest wear, if possible.

### Action 203

The method comprises identifying, based on the characteristics of the vehicle 1, one or more conditions 2 for the maneuver to be achievable. Achievable in examples herein may mean that the maneuver may need to fulfil the one or more conditions 2 for the vehicle 1 to be able to perform the maneuver.

In other words, based on the characteristics as discussed above, the vehicle 1 may be subject to different conditions to achieve the maneuver, e.g., with respect to any one or more out of: length, mass, type of vehicle, coupling points, steering or lifting of axles, etc.

Hence, when considering the characteristics of the vehicle 1, it may be possible to identify for the specific characteristics, how the vehicle 1 may need to operate to perform the maneuver which forms as part of the one or more conditions 2.

The one or more conditions 2 may comprise one or more essential conditions for performing the maneuver, at least for one way to perform the maneuver.

The one or more conditions 2 may further comprise one or more conditions for achieving one or more optional purposes, such as to reduce wear, energy/fuel/air consumption. In particular, in some examples herein the one or more conditions 2 may be based on tire wear of the wheels w of the vehicle 1, i.e., such that the one or more conditions 2 may comprise conditions for achieving the maneuver when the vehicle 1 has poor tire wear of at least one wheel w, and/or to reduce wear of at least one wheel w of the vehicle 1, such as by reducing a load applied on wheels with tire wear above a threshold. Additionally or alternatively, the one or more conditions 2 may relate to a need for adjusting an axle suspension system of a wheel w, or even to lift completely an axle if possible, or to reduce a tire slip or tire force of the wheel w by redistributing the forces (could be for braking or for propulsion) between the wheels of axles of the vehicle 1.

For example, to be able to make a sharp turn with a turning radius above a threshold in a limited area, it may be needed for the vehicle 1 to position itself accordingly to have enough room to make the turn, e.g., by partially entering a lane arranged for traffic in the opposite direction. Similarly, when entering a tunnel with height constraints, the vehicle 1 may need to align itself with a longitudinal direction of the tunnel prior to entering the tunnel. This means that there may be areas and/or orientations the vehicle 1 needs to position itself into before performing the maneuver.

Additionally or alternatively, dynamic conditions may form part of the one or more conditions 2 such that a vehicle motion and/or different actuators may operate according to a certain timing before or as the vehicle 1 performs the maneuver. For example, vehicle or wheels speed and/or load distribution may be necessary for the vehicle 1 to time accurately when performing the maneuver, for example when the vehicle 1 comprises multiple vehicle units, e.g., two trailers, and the vehicle 1 is lane changing and exiting a highway.

In some examples, the one or more conditions 2 are identified to be, when initiating or when performing the maneuver, any one or more out of:
- the vehicle 1 being in an area,
- a height of the vehicle 1 being positioned with respect to a height constraint of an area,
- the vehicle 1 adhering to one or more time, motion, and/or control input constraints when performing one or more operations as part of the maneuver,
- the vehicle 1 following a trajectory within an error margin,
- a center of gravity or load distribution of the vehicle 1 is within an interval,
- respective axle height of the one or more axles 50 of the vehicle 1 is within a respective interval,
- respective vehicle motion parameters of the vehicle 1 is within a respective interval, e.g., any one or more out of, vehicle speed, wheel speed, lateral and/or longitudinal deceleration/acceleration and/or slip, forces applied to the vehicle 1, brake torque, pitch, yaw, roll, steering wheel angle rate/torque, control of coupling points 60, articulation angle, articulation angle rate, forces applied to the vehicle 1,
- one or more articulation angles of the vehicle 1 fulfill is within a respective interval,
- respective actuators of one or more actuators of the vehicle 1 are actuated such that their respective position, parameters, or values are within a respective interval, and
- a steering input being within an interval or adhering to a function of time.

All of the one or more conditions 2 may be subject to a timing constraint and/or a function of time.

The timing constraint may further include steering threshold/s or intervals, or steering wheel rate, acceleration or deceleration.

In some examples, the one or more conditions 2 are identified to require the vehicle 1 to any one or more out of: operate outside predefined traffic boundaries of a road, operate in multiple lanes of a road simultaneously, operate in lanes dedicated for other vehicles and/or for traffic of a different longitudinal motion than a longitudinal motion of the vehicle 1. In other words, the one or more conditions may require the vehicle 1 to at least partly leave a designated area for the vehicle 1 to operate to be able to make the maneuver possible. This may be particularly true when the vehicle 1 is a long vehicle or has multiple vehicle units and the maneuver comprises turning the vehicle 1. This is since the vehicle 1 may need an increased space to perform the turning maneuver. Long vehicle herein may be longer than a set threshold, e.g., 10 or more meters, or 20 or more meters.

For example, when the vehicle 1 has a length above a threshold, the vehicle 1 may require a very wide turn across two or more lanes for turning the vehicle..

In some examples, identifying the one or more conditions 2 is based on any one or more of:
- one or more simulated maneuvers, e.g., identification using any suitable simulation of the vehicle 1,
- one or more previously performed maneuvers, e.g., by learning a behavior of the vehicle 1, and
- a vehicle 1 model and a model of the environment where the maneuver is to be performed, e.g., based on predetermined models and/or machine learning models for how the vehicle 1 behaves with respect to the environment.

In other words, the one or more conditions 2 may be identified in any suitable manner. For example, the one or more conditions may be identified to comprise any one or more out of:
- the vehicle 1 should be in a set area or trajectory,
- the vehicle 1 should have set speed or wheel speed
- the vehicle 1 should have a set load distribution or axle height at certain position or time,
- the vehicle 1 should have a steering wheel angle within an interval, and
- an actuator output should meet a condition.

The one or more conditions may further be identified based on road characteristics of a road travelled or to be travelled by the vehicle 1. The road characteristics may comprise road slope, e.g., related to vehicle power capabilities, and/or road banking which could affect stability and the roll over risk of the vehicle. The road characteristics may comprise any suitable parameter of the road which may require the vehicle to reach some condition to be able to perform the maneuver.

### Action 204

The method comprises issuing conditional information indicating at least one of the one or more conditions 2 to at least one an entity controlling the vehicle 1.

In some examples, issuing the conditional information comprises indicating an interpretation of at least part of the one or more conditions 2 to a user of the vehicle 1, e.g., via the user interface 30. For example, the one or more conditions 2 may, as part of issuing the conditional information, be indicated to a user such as a driver of the vehicle 1 on a graphical interface such as by indicating a trajectory for the vehicle to follow and/or one or more areas, positions and orientations needed to be achieved by the vehicle 1 to be able to perform the maneuver.

As another example, the one or more conditions 2 may, as part of issuing the conditional information, be indicated to the vehicle 1 by haptic feedback to the user, e.g., as part the user interface 30, such as by turning or vibrating input controls of the vehicle 1, e.g., steering wheels, levers and/or pedals of the vehicle 1.

In other words, issuing the conditional information may comprise indicating the one or more conditions 2 to the user in any suitable manner, e.g., for assisting the user in operating the vehicle 1 such that the vehicle 1 can perform the maneuver.

In some examples, issuing the conditional information comprises, providing information of at least part of the one or more conditions 2 to a control system of the vehicle 1. The information provided may relate to operations that are difficult for the user to perform. For example, the information may indicate how load shall be distributed when performing the maneuver or prior to performing the maneuver. As another example, the information may indicate when and by how much torque shall be applied to wheels of the vehicle 1 and/or how and/or which axles of the one or more axles 50 shall be lifted.

In some examples, the conditional information may be an assisting tool such as a graphical indication to a driver of the vehicle 1, but may also be information to a control system of the vehicle 1, or both. For example, the conditional information may indicate an area where the vehicle 1 should position itself in to perform the maneuver. The driver may perform steering and/or speed guidance on top of positioning and a control system of the vehicle 1 may perform the other aspects to meet the one or more conditions 2, e.g., load distribution, force distribution between axles (propulsion or braking), steering of steerable axles of towed vehicle units, gear changes, setting differential locking configurations.

### Action 205

The method may comprise detecting that at least one of the one or more conditions 2 are violated or are predicted to be violated.

Detecting that at least one of the one or more conditions 2 are violated or are predicted to be violated may comprise obtaining sensor data of the one or more sensors 20 and predicting or detecting that the vehicle 1 violates or are predicted to violate the one or more conditions 2 based on the obtained sensor data and optionally based on any suitable model or heuristics.

For example, if the one or more conditions 2 comprises that the vehicle 1 shall follow a trajectory and/or shall position itself in a certain position, the sensor data may indicate that the vehicle 1 has failed to do so or will fail to do so.

### Action 206

The method may comprise, in response to detecting that the at least one of the one or more conditions 2 are violated or are predicted to be violated, e.g., as part of Action 205, issuing violation information indicating the violation or predicted violation of the one or more conditions 2.

The violation information is issued to any of:
- the at least one entity controlling the vehicle 1, e.g., via the user interface 30 and/or by instructions to a control system of the vehicle 1,
- surrounding environment of the vehicle 1, e.g., by lights, speakers, or horn by the vehicle 1, or
- a combination thereof.

In some examples, issuing the violation information comprises triggering a vibration in a steering wheel of the vehicle 1, e.g., to alert a user such as a driver of the vehicle 1 and/or to nudge a steering of the vehicle 1 to meet the one or more conditions 2.

In some examples, issuing the violation information comprises triggering one or more operations for adjusting an operation of the vehicle 1 to meet the one or more conditions 2.

In some examples, issuing the violation information comprises triggering an alert, e.g., to a user of the vehicle 1 and/or to surrounding traffic of the vehicle 1.

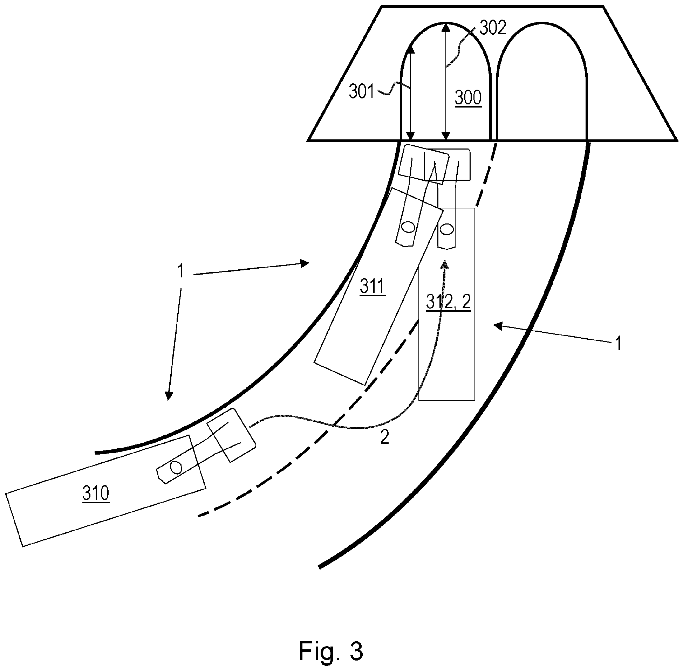

**FIG.** 3 illustrates an example maneuver of the vehicle entering a **tunnel 300** when the vehicle 1 is situated in an **initial position** 310. In this example the vehicle 1 comprises a trailer and predefined height as part of the characteristics of the vehicle 1. The tunnel 300 may be subject to **different heights 301, 302** such that if the vehicle 1 enters the tunnel from a **first position 311** which may be a natural position for the vehicle 1 to reach if continuing normal operations, the vehicle 1 would collide with the tunnel 300 due to the vehicle 1 being too tall for a **first height 301** of the tunnel 300. Hence, the vehicle 1 needs to perform a maneuver to enter the tunnel 300 from a **second position 312** such that the vehicle 1 can align itself with the second height 302 of the tunnel 300 which height is sufficient for the height of the vehicle 1 to enter the tunnel. Thereby, examples herein may determine the tunnel entering maneuver, e.g., as in Action 202, and may identify the one or more conditions 2 at least comprising reaching the second position 312 from the initial position 311, e.g., as part of Action 203. Conditional information of reaching the second position 312 and/or for entering the tunnel 300 via the second height 302 may be indicated to the at least one entity controlling the vehicle 1 as part of at least one of the one or more conditions 2, e.g., as part of Action 204. For example, the second position 312 and/or a trajectory leading to the second position 312 may be indicated to a user of the vehicle 1, e.g., by showing the trajectory and/or the position on a screen, dashboard or windshield of the vehicle 1, or by using any other suitable user interface to impart said information.

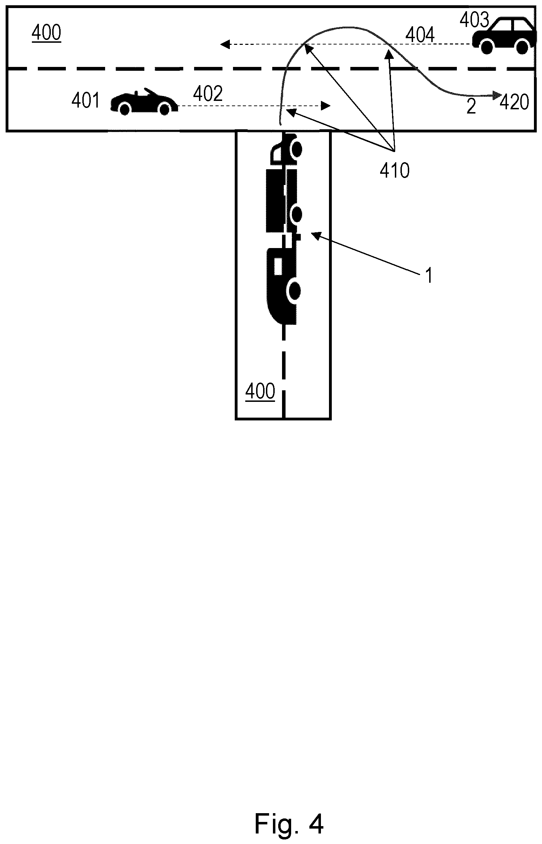

**FIG. 4** illustrates an example turning maneuver of turning the vehicle 1 in a junction 400. The vehicle 1 may in this example comprise a towing unit and two towed units as part of the characteristics of the vehicle 1. To perform the turning maneuver the vehicle 1 may need to borrow a lane from opposing traffic, and the maneuver needs to be performed such that there are no collisions with a **first vehicle 401** travelling a **first direction 402** and/or a **second vehicle 403** travelling a **second direction 404.** The first direction 402 and the second direction 404 may be in opposite directions, e.g., of different opposing lanes of a road of the junction 400. The maneuver may relate to using lanes where the first and second vehicles 401, 403 are travelling, and may need to be performed to avoid collision or stall of the first and second vehicles 401, 403 with respect to the first and second directions 402, 404.

Thereby, examples herein may determine the turning maneuver, e.g., as in Action 202, and may identify the one or more conditions 2 at least comprising reaching a final destination 420, while avoiding potential collision hazards 410 with the first and second vehicles 401, 403 e.g., as part of Action 203. Avoiding collision hazards 410 may relate to timing a vehicle motion such that the vehicle 1 avoid the first and second vehicle 401, 403 or any other vehicle travelling the junction 400 at least partly by timing the turning maneuver of the vehicle 1 such that the vehicle 1 can reach the final destination 420 in a timely manner without having to risk collisions or causing delays for the other vehicles 401, 403.

Conditional information of reaching the final position 420 may be indicated to the at least one an entity controlling the vehicle 1 as part of at least one of the one or more conditions 2, e.g., as part of Action 204. For example, a trajectory 2 and/or vehicle motion parameters may be transmitted to the at least one entity prior to, or as the vehicle 1 is performing the maneuver.

In examples herein the intended trajectory 2, e.g., a trajectory that includes time for each intended vehicle position, could be shared to the vehicles 401, 403 to handshake and agree on the maneuver since it requires borrowing from the opposite lane and advanced driving skills. Another alternative is to select a less difficult turn, e.g., to instead turn left..

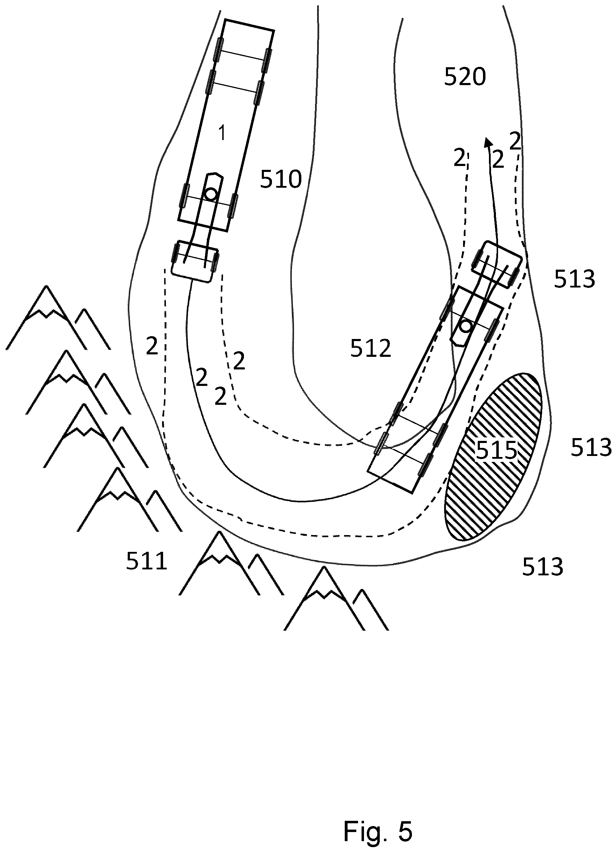

**FIG. 5** illustrates an example maneuver of the vehicle 1 performing a turning maneuver downhill a mountain road 510. The characteristics of the vehicle 1 may indicate a trailer and a wheelbase and/or length of the vehicle 1. The vehicle 1 may be constrained in its movement such that there may be a mountain wall 511 which the vehicle 1 cannot travel, however the vehicle 1 may be able to travel at least partly outside the road 510 in an intermediate gravel area 512. Beside the road 510 there may be steep fall 513 where the vehicle 1 cannot travel. A hazard area 515 may indicate an area where, if the vehicle 1 would travel, it cannot complete the downhill turning maneuver and may need to stop.

Thereby, examples herein may determine the turning maneuver, e.g., as in Action 202, and may identify the one or more conditions 2 at least comprising reaching a final destination 520, while avoiding the mountain wall 511, the fall 513 and the hazard area 515, e.g., as part of Action 203. Conditional information of reaching the final position 520 may be indicated to the at least one entity controlling the vehicle 1 as part of at least one of the one or more conditions 2, e.g., as part of Action 204. For example, a trajectory 2 and/or an interval of where the vehicle should travel may be transmitted to the at least one entity prior to, or as the vehicle 1 is performing the maneuver.

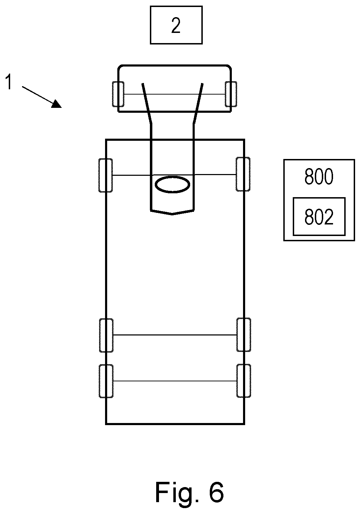

**FIG. 6** is another view of **FIG. 1****,** according to an example.

The computer system 800 comprising the processing circuitry 802 configured to assist in operating the vehicle 1 is provided. The processing circuitry 802 is configured to obtain characteristics of the vehicle 1. The characteristics are indicative of physical attributes and/or capabilities of the vehicle 1. The processing circuitry 802 is configured to determine a maneuver to be performed by the vehicle 1. The maneuver is determined based on any one or more out of: an input indicative of the maneuver, vehicle status information indicative of surroundings of the vehicle 1 and/or a motion of the vehicle 1, and a route for the vehicle 1 to follow. The processing circuitry 802 is configured to, based on the characteristics of the vehicle 1, identify one or more conditions 2 for the maneuver to be achievable. The processing circuitry 802 is configured to, issue conditional information indicating at least one of the one or more conditions 2 to at least one an entity controlling the vehicle 1.

The features of the computer system 800 may be combined with any of the examples above or with the attached claims,

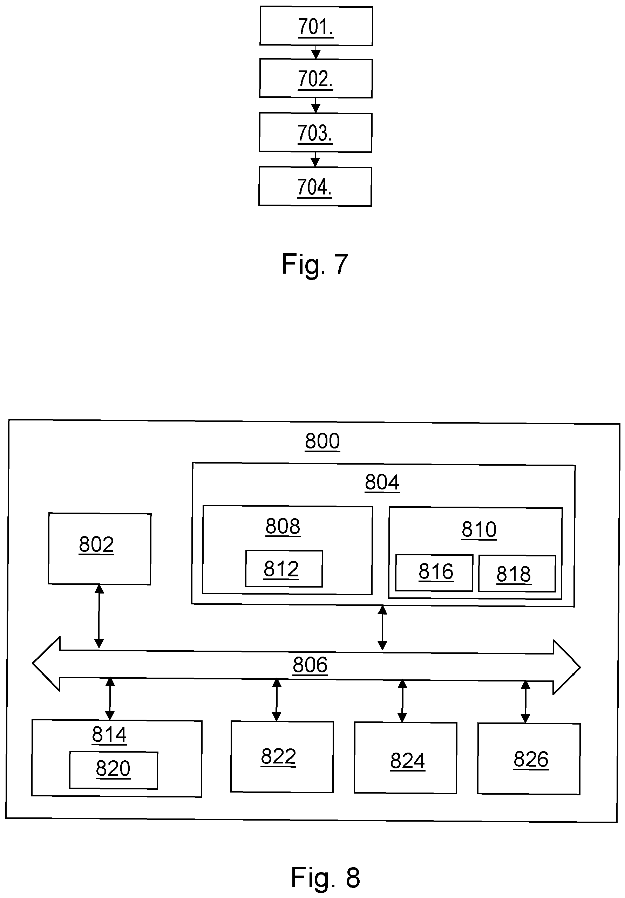

**FIG. 7** is a flow chart of a computer-implemented method for assisting in operating a vehicle 1 is provided. The method comprises the below actions which may be combined with any of the examples above or with the attached claims,

### Action 701

The method comprises, by the processing circuitry 802 of a computer system 800, obtaining characteristics of the vehicle 1. The characteristics are indicative of physical attributes and/or capabilities of the vehicle 1.

### Action 702

The method comprises, by the processing circuitry 802, determining a maneuver to be performed by the vehicle 1.

The maneuver is determined based on any one or more out of: an input indicative of the maneuver, vehicle status information indicative of surroundings of the vehicle 1 and/or a motion of the vehicle 1, and a route for the vehicle 1 to follow.

### Action 703

The method comprises, by the processing circuitry 802, based on the characteristics of the vehicle 1, identifying one or more conditions 2 for the maneuver to be achievable.

### Action 704

The method comprises, by the processing circuitry 802, issuing conditional information indicating at least one of the one or more conditions 2 to at least one an entity controlling the vehicle 1.

**FIG. 8** is a schematic diagram of a computer system **800** for implementing examples disclosed herein. The computer system **800** is adapted to execute instructions from a computer-readable medium to perform these and/or any of the functions or processing described herein. The computer system **800** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **800** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **800** may comprise at least one computing device or electronic device capable of including firmware, hardware, and/or executing software instructions to implement the functionality described herein. The computer system **800** may include processing circuitry **802** (e.g., processing circuitry including one or more processor devices or control units), a memory **804,** and a system bus **806.** The computer system **800** may include at least one computing device having the processing circuitry **802.** The system bus **806** provides an interface for system components including, but not limited to, the memory **804** and the processing circuitry **802.** The processing circuitry **802** may include any number of hardware components for conducting data or signal processing or for executing computer code stored in memory **804.** The processing circuitry **802** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **802** may further include computer executable code that controls operation of the programmable device.

The system bus **806** may be any of several types of bus structures that may further interconnect to a memory bus (with or without a memory controller), a peripheral bus, and/or a local bus using any of a variety of bus architectures. The memory **804** may be one or more devices for storing data and/or computer code for completing or facilitating methods described herein. The memory **804** may include database components, object code components, script components, or other types of information structure for supporting the various activities herein. Any distributed or local memory device may be utilized with the systems and methods of this description. The memory **804** may be communicably connected to the processing circuitry **802** (e.g., via a circuit or any other wired, wireless, or network connection) and may include computer code for executing one or more processes described herein. The memory **804** may include non-volatile memory **808** (e.g., read-only memory (ROM), erasable programmable read-only memory (EPROM), electrically erasable programmable read-only memory (EEPROM), etc.), and volatile memory **810** (e.g., random-access memory (RAM)), or any other medium which can be used to carry or store desired program code in the form of machine-executable instructions or data structures and which can be accessed by a computer or other machine with processing circuitry **802.** A basic input/output system (BIOS) **812** may be stored in the non-volatile memory **808** and can include the basic routines that help to transfer information between elements within the computer system **800.**

The computer system **800** may further include or be coupled to a non-transitory computer-readable storage medium such as the storage device **814,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **814** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **814** and/or in the volatile memory **810,** which may include an operating system **816** and/or one or more program modules **818.** All or a portion of the examples disclosed herein may be implemented as a computer program **820** stored on a transitory or non-transitory computer-usable or computer-readable storage medium (e.g., single medium or multiple media), such as the storage device **814,** which includes complex programming instructions (e.g., complex computer-readable program code) to cause the processing circuitry **802** to carry out actions described herein. Thus, the computer-readable program code of the computer program **820** can comprise software instructions for implementing the functionality of the examples described herein when executed by the processing circuitry **802.** In some examples, the storage device **814** may be a computer program product (e.g., readable storage medium) storing the computer program **820** thereon, where at least a portion of a computer program **820** may be loadable (e.g., into a processor) for implementing the functionality of the examples described herein when executed by the processing circuitry **802.** The processing circuitry **802** may serve as a controller or control system for the computer system **800** that is to implement the functionality described herein.

The computer system **800** may include an input device interface **822** configured to receive input and selections to be communicated to the computer system **800** when executing instructions, such as from a keyboard, mouse, touch-sensitive surface, etc. Such input devices may be connected to the processing circuitry **802** through the input device interface **822** coupled to the system bus **806** but can be connected through other interfaces, such as a parallel port, an Institute of Electrical and Electronic Engineers (IEEE) 1394 serial port, a Universal Serial Bus (USB) port, an IR interface, and the like. The computer system **800** may include an output device interface **824** configured to forward output, such as to a display, a video display unit (e.g., a liquid crystal display (LCD) or a cathode ray tube (CRT)). The computer system **800** may include a communications interface **826** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follows a list of Examples 1-20. Each Example can be combined with any of the other examples discussed above.
Example 1. A computer system 800 comprising processing circuitry 802 configured to assist in operating a vehicle 1, the processing circuitry 802 being configured to,
   - obtain characteristics of the vehicle 1, the characteristics being indicative of physical attributes and/or capabilities of the vehicle 1,
   - determine a maneuver to be performed by the vehicle 1, the maneuver being determined based on any one or more out of:
      ∘ an input indicative of the maneuver,
      ∘ vehicle status information indicative of surroundings of the vehicle 1 and/or a motion of the vehicle 1, and
      ∘ a route for the vehicle 1 to follow;
   - based on the characteristics of the vehicle 1, identify one or more conditions 2 for the maneuver to be achievable,
   - issue conditional information indicating at least one of the one or more conditions 2 to at least one an entity controlling the vehicle 1.
Example 2. The computer system 800 of Example 1, wherein the processing circuitry (802) is further configured to:
   - in response to detecting that at least one of the one or more conditions 2 are violated or are predicted to be violated, issue violation information indicating the violation or predicted violation of the one or more conditions 2, the violation information being issued to any of:
      ∘ the at least one entity controlling the vehicle 1,
      ∘ surrounding environment of the vehicle 1, or
      ∘ a combination thereof.
Example 3. The computer system 800 of Example 2 wherein issuing the violation information comprises any one or more out of:
   - triggering a vibration in a steering wheel of the vehicle 1,
   - triggering one or more operations for adjusting an operation of the vehicle 1 to meet the one or more conditions 2, and
   - triggering an alert.
Example 4. The computer system 800 of any of Examples 1-3, wherein issuing the conditional information comprises any one or both out of:
   - indicating an interpretation of at least part of the one or more conditions 2 to a user of the vehicle 1 via a user interface,
   - providing information of at least part of the one or more conditions 2 to a control system of the vehicle 1.
Example 5. The computer system 800 of any of Examples 1-4, wherein the one or more conditions 2 are identified to be, when initiating or when performing the maneuver, any one or more out of:
   - the vehicle 1 being in an area,
   - a height of the vehicle 1 being positioned with respect to a height constraint of an area,
   - the vehicle 1 adhering to one or more time, motion, and/or control input constraints when performing one or more operations as part of the maneuver,
   - the vehicle 1 following a trajectory within an error margin,
   - a center of gravity or load distribution of the vehicle 1 is within an interval,
   - respective axle height of one or more axles of the vehicle 1 is within a respective interval,
   - respective vehicle motion parameters of the vehicle 1 is within a respective interval,
   - one or more articulation angles of the vehicle 1 fulfill is within a respective interval,
   - respective actuators of one or more actuators of the vehicle 1 are actuated such that their respective position, parameters, or values are within a respective interval, and
   - a steering input being within an interval or adhering to a function of time.
Example 6. The computer system 800 of any of Examples 1-5, wherein the one or more conditions 2 are identified to require the vehicle 1 to any one or more out of:
   - operate outside predefined traffic boundaries of a road,
   - operate in multiple lanes of a road simultaneously,
   - operate in lanes dedicated for other vehicles and/or for traffic of a different longitudinal motion than a longitudinal motion of the vehicle 1.
Example 7. The computer system 800 of any of Examples 1-6, wherein the maneuver is determined to be any one or more out of:
   - turning the vehicle 1,
   - reversing the vehicle 1,
   - parking the vehicle 1 at a designated area,
   - entering a tunnel,
   - avoiding one or more obstacles, and
   - exiting or entering a road section.
Example 8. The computer system 800 of any of Examples 1-7, wherein the maneuver is determined to be performed in an area with a physical boundary for how the vehicle 1 can and/or is allowed to operate.
Example 9. The computer system 800 of any of Examples 1-8, wherein the physical attributes of the vehicle 1 comprises any one or more out of:
   - type of the vehicle 1,
   - number of vehicle units of the vehicle 1,
   - wheelbase and/or width of the vehicle 1,
   - tire wear of tires of the vehicle 1,
   - articulation or coupling points of the vehicle 1,
   - an axle configuration of the vehicle 1, and
   - a mass of the vehicle 1.
Example 10. The computer system 800 of any of Examples 1-9, wherein the capabilities of the vehicle 1 comprises any one or more out of:
   - capabilities of motion support devices of the vehicle 1, and
   - capabilities of adjusting axle height of axles of the vehicle 1,
   - steering capabilities of axles of the vehicle 1,
   - tire capabilities of the vehicle 1, and
   - one or more capabilities for distributing load.
Example 11. The computer system 800 of any of Examples 1-10, wherein identifying the one or more conditions 2 is based on any one or more out of;
   - one or more simulated maneuvers,
   - one or more previously performed maneuvers, and
   - a vehicle 1 model and a model of the environment where the maneuver is to be performed.
Example 12. A vehicle comprising and/or being controlled by the computer system 800 according to any one of Examples 1-11.
Example 13. The vehicle of Example 12, wherein the vehicle 1 is a combination vehicle comprising at least two vehicle units 11, 12, 13.
Example 14. The vehicle of Example 13, wherein the vehicle 1 is a combination vehicle comprising a towing vehicle unit and at least two towed vehicle units 12, 13.
Example 15. A computer-implemented method for assisting in operating a vehicle 1, the method comprising:
   - by processing circuitry 802 of a computer system 800, obtaining 201, 701 characteristics of the vehicle 1, the characteristics being indicative of physical attributes and/or capabilities of the vehicle 1,
   - by the processing circuitry 802, determining 202, 702 a maneuver to be performed by the vehicle 1, the maneuver being determined based on any one or more out of
      ∘ an input indicative of the maneuver,
      ∘ vehicle status information indicative of surroundings of the vehicle 1 and/or a motion of the vehicle 1, and
      ∘ a route for the vehicle 1 to follow;
   - by the processing circuitry 802, based on the characteristics of the vehicle 1, identifying 203, 703 one or more conditions 2 for the maneuver to be achievable,
   - by the processing circuitry 802, issuing 204, 704 conditional information indicating at least one of the one or more conditions 2 to at least one an entity controlling the vehicle 1.
Example 16. The method of Example 15 further comprising:
   - by the processing circuitry 802, in response to detecting 205 that at least one of the one or more conditions 2 are violated or are predicted to be violated, issuing 206 violation information indicating the violation or predicted violation of the one or more conditions 2, the violation information being issued to any of:
      ∘ the at least one entity controlling the vehicle 1,
      ∘ surrounding environment of the vehicle 1, or
      ∘ a combination thereof.
Example 17. The method of Example 16 wherein issuing 206 the violation information comprises any one or more out of:
   - triggering a vibration in a steering wheel of the vehicle 1,
   - triggering one or more operations for adjusting an operation of the vehicle 1 to meet the one or more conditions 2, and
   - triggering an alert.
Example 18. The method of any of Examples 15-17, wherein issuing 204 the conditional information comprises any one or both out of:
   - indicating an interpretation of at least part of the one or more conditions 2 to a user of the vehicle 1 via a user interface,
   - providing information of at least part of the one or more conditions 2 to a control system of the vehicle 1.
Example 19. A computer program product comprising program code for performing, when executed by the processing circuitry 802, the method of any of Examples 15-18.
Example 20. A non-transitory computer-readable storage medium comprising instructions, which when executed by the processing circuitry 802, cause the processing circuitry 802 to perform the method of any of Examples 15-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (800) comprising processing circuitry (802) configured to assist in operating a vehicle (1), the processing circuitry (802) being configured to,
- obtain characteristics of the vehicle (1), the characteristics being indicative of physical attributes and/or capabilities of the vehicle (1),
- determine a maneuver to be performed by the vehicle (1), the maneuver being determined based on any one or more out of:
∘ an input indicative of the maneuver,
∘ vehicle status information indicative of surroundings of the vehicle (1) and/or a motion of the vehicle (1), and
∘ a route for the vehicle (1) to follow;
- based on the characteristics of the vehicle (1), identify one or more conditions (2) for the maneuver to be achievable,
- issue conditional information indicating at least one of the one or more conditions (2) to at least one an entity controlling the vehicle (1).

2. The computer system (800) of claim 1, wherein the processing circuitry (802) is further configured to
- in response to detecting that at least one of the one or more conditions (2) are violated or are predicted to be violated, issue violation information indicating the violation or predicted violation of the one or more conditions (2), the violation information being issued to any of:
∘ the at least one entity controlling the vehicle (1),
∘ surrounding environment of the vehicle (1), or
∘ a combination thereof.

3. The computer system (800) of claim 2 wherein issuing the violation information comprises any one or more out of:
- triggering a vibration in a steering wheel of the vehicle (1),
- triggering one or more operations for adjusting an operation of the vehicle (1) to meet the one or more conditions (2), and
- triggering an alert.

4. The computer system (800) of any of claims 1-3, wherein issuing the conditional information comprises any one or both out of:
- indicating an interpretation of at least part of the one or more conditions (2) to a user of the vehicle (1) via a user interface,
- providing information of at least part of the one or more conditions (2) to a control system of the vehicle (1).

5. The computer system (800) of any of claims 1-4, wherein the one or more conditions (2) are identified to be, when initiating or when performing the maneuver, any one or more out of:
- the vehicle (1) being in an area,
- a height of the vehicle (1) being positioned with respect to a height constraint of an area,
- the vehicle (1) adhering to one or more time, motion, and/or control input constraints when performing one or more operations as part of the maneuver,
- the vehicle (1) following a trajectory within an error margin,
- a center of gravity or load distribution of the vehicle (1) is within an interval,
- respective axle height of one or more axles of the vehicle (1) is within a respective interval,
- respective vehicle motion parameters of the vehicle (1) is within a respective interval,
- one or more articulation angles of the vehicle (1) fulfill is within a respective interval,
- respective actuators of one or more actuators of the vehicle (1) are actuated such that their respective position, parameters, or values are within a respective interval, and
- a steering input being within an interval, or adhering to a function of time.

6. The computer system (800) of any of claims 1-5, wherein the one or more conditions (2) are identified to require the vehicle (1) to any one or more out of:
- operate outside predefined traffic boundaries of a road,
- operate in multiple lanes of a road simultaneously,
- operate in lanes dedicated for other vehicles and/or for traffic of a different longitudinal motion than a longitudinal motion of the vehicle (1).

7. The computer system (800) of any of claims 1-6, wherein the maneuver is determined to be any one or more out of:
- turning the vehicle (1),
- reversing the vehicle (1),
- parking the vehicle (1) at a designated area,
- entering a tunnel,
- avoiding one or more obstacles, and
- exiting or entering a road section.

8. The computer system (800) of any of claims 1-7, wherein the maneuver is determined to be performed in an area with a physical boundary for how the vehicle (1) can and/or is allowed to operate.

9. The computer system (800) of any of claims 1-8, wherein the physical attributes of the vehicle (1) comprises any one or more out of:
- type of the vehicle (1),
- number of vehicle units of the vehicle (1),
- wheelbase and/or width of the vehicle (1),
- tire wear of tires of the vehicle (1),
- articulation or coupling points of the vehicle (1),
- an axle configuration of the vehicle (1), and
- a mass of the vehicle (1); and/or
wherein the capabilities of the vehicle (1) comprises any one or more out of:
- capabilities of motion support devices of the vehicle (1),
- capabilities of adjusting axle height of axles of the vehicle (1),
- steering capabilities of axles of the vehicle (1),
- tire capabilities of the vehicle (1), and
- one or more capabilities for distributing load.

10. The computer system (800) of any of claims 1-9, wherein identifying the one or more conditions (2) is based on any one or more out of;
- one or more simulated maneuvers,
- one or more previously performed maneuvers, and
- a vehicle model and a model of the environment where the maneuver is to be performed.

11. A vehicle comprising and/or being controlled by the computer system (800) according to any one of claims 1-11, optionally wherein the vehicle (1) is a combination vehicle comprising at least two vehicle units (11, 12, 13), and optionally wherein the vehicle (1) is a combination vehicle comprising a towing vehicle unit and at least two towed vehicle units (12, 13).

12. A computer-implemented method for assisting in operating a vehicle (1), the method comprising:
- by processing circuitry (802) of a computer system (800), obtaining (201, 701) characteristics of the vehicle (1), the characteristics being indicative of physical attributes and/or capabilities of the vehicle (1),
- by the processing circuitry (802), determining (202, 702) a maneuver to be performed by the vehicle (1), the maneuver being determined based on any one or more out of :
∘ an input indicative of the maneuver,
∘ vehicle status information indicative of surroundings of the vehicle (1) and/or a motion of the vehicle (1), and
∘ a route for the vehicle (1) to follow;
- by the processing circuitry (802), based on the characteristics of the vehicle (1), identifying (203, 703) one or more conditions (2) for the maneuver to be achievable,
- by the processing circuitry (802), issuing (204, 704) conditional information indicating at least one of the one or more conditions (2) to at least one an entity controlling the vehicle (1).

13. The method of claim 12 further comprising:
- by the processing circuitry (802), in response to detecting (205) that at least one of the one or more conditions (2) are violated or are predicted to be violated, issuing (206) violation information indicating the violation or predicted violation of the one or more conditions (2), the violation information being issued to any of:
∘ the at least one entity controlling the vehicle (1),
∘ surrounding environment of the vehicle (1), or
∘ a combination thereof.

14. A computer program product comprising program code for performing, when executed by the processing circuitry (802), the method of any of claims 12-13.

15. A non-transitory computer-readable storage medium comprising instructions, which when executed by the processing circuitry (802), cause the processing circuitry (802) to perform the method of any of claims 12-13.
